# EUROPÄISCHE PATENTSCHRIFT

(11) **EP 3 715 074 B1**
(45) Veröffentlichungstag und Bekanntmachung des Hinweises auf die Patenterteilung: **26.05.2021**
(21) Anmeldenummer: 19165075.3
(22) Anmeldetag: 26.03.2019
(51) Int. Cl.: B27N 3/00, B27N 7/00, C08L 97/02, B32B 9/02

(54) **RECYCELBARES HOLZWERKSTOFFPRODUKT, INSBESONDERE EIN RECYCELBARES DEKORATIVES LAMINAT AUF HOLZWERKSTOFFBASIS**
RECYCLABLE WOODEN PRODUCT, IN PARTICULAR A RECYCLABLE DECORATIVE LAMINATE BASED ON WOODEN MATERIAL
PRODUIT RECYCLABLE EN MATÉRIAU DÉRIVÉ DU BOIS, EN PARTICULIER UN STRATIFIÉ DÉCORATIF RECYCLABLE À BASE DE MATÉRIAU DÉRIVÉ DU BOIS

(43) Veröffentlichungstag der Anmeldung: 30.09.2020
(60) Teilanmeldung: 21166895.9
(73) Patentinhaber: Flooring Technologies Ltd., Kalkara SCM1001 (MT)
(72) Erfinder: Kalwa, Norbert, 32805 Horn-Bad Meinberg (DE)
(74) Vertreter: Maikowski & Ninnemann Patentanwälte Partnerschaft mbB

(56) Entgegenhaltungen:
- EP-A1- 0 680 522
- WO-A2-03/020803
- DE-B- 1 201 045
- DE-U1- 20 213 499
- JP-A- 2009 132 093
- US-A- 5 804 035
- US-A1- 2009 148 656
- US-A1- 2015 051 320
- US-A1- 2018 162 993

## Beschreibung

Die vorliegende Erfindung betrifft ein recycelbares Holzwerkstoffprodukt, insbesondere ein recycelbares dekoratives Laminat auf Holzwerkstoffbasis, ein Verfahren zu dessen Herstellung und ein Verfahren zum Recyceln eines solchen Holzwerkstoffproduktes.

### Beschreibung

Durch die Bestrebungen mehr und mehr Produkte nach ihrer Nutzung einem regenerativen System zu zuführen, steigt der Druck bei Produkten recyclingfähige Rohstoffe einzusetzen bzw. den anfallenden Abfall zu minimieren. Dies gilt auch für Holzwerkstoffprodukte (HWS).

Allerdings wird heute der überwiegende Teil der Holzwerkstoffe mit einer Beschichtung versehen, die nach der Nutzung entweder nicht recycelbar ist bzw. die, auf Grund des verwendeten Klebers nicht ohne weiteres vom Träger ablösbar ist. Zwar gibt es heute schon die Möglichkeit Klebstoffe einzusetzen, die durch Erwärmung wieder plastisch werden und damit das Ablösen der Folie ermöglichen, allerdings sind diese Systeme damit nicht in Bereichen einsetzbar, in denen höhere Temperaturen auftreten können. Damit verbleibt aber das Problem des Recyclings bzw. der Entsorgung der Folie. Dieses Verfahren besitzt zu dem den Nachteil, dass das Entfernen der Folie wegen der großen Vielfalt der Geometrien der Möbelteile nicht ohne weiteres automatisierbar ist.

Ein Verfahren mit dem eine Wiedergewinnung von Holzpartikel mit hydrolysierbaren Bindemitteln möglich ist, wurde bereits 1963 von Sandberg (DE 1201045) beschrieben. Hierbei werden die die Bindemittel enthaltenden Holzwerkstoffe HWS in einem Autoklaven für mehrere Stunden bei 1,5 bis 6 bar Wasserdampf erhitzt. Danach können die Späne aus dem Prozess durch Absieben entfernt werden. Es verbleiben die Beschichtungen an denen sich noch die Klebstoffe befinden. Für diese Reststoffe (Folien, Melaminbeschichtungen usw.) gibt es allerdings keine sinnvolle Nutzung.

Zudem enthalten viele Holzwerkstoffe Bindemittel, die das oben skizzierte Recycling schwierig oder sogar unmöglich machen, da diese Bindemittel gegenüber thermischem und/oder gegenüber hydrolytischem Angriff sehr stabil sind. Dabei handelt es sich um verstärkte Leime (z. B. mit Melamin verstärkter Harnstoff-Formaldehyd-Leim) oder um Isocyanat-Leime.

Das thermische Recyceln spielt aus den genannten Gründen heute bei der Entsorgung von Holzwerkstoff-Produkten bei weitem die größte Rolle. Damit wird jedoch auch das Konzept der Kaskadennutzung für Holz nur unzureichend bzw. gar nicht umgesetzt. Zudem enthält der heute am häufigsten verwendete Leim (Harnstoff-Formaldehyd-Leim) relativ viel Stickstoff. Dies kann bei der Verbrennung zu hohen Stickoxidemissionen führen. Bei der Hydrolyse/Verrottung entstehen Abwässer, die hohe Konzentrationen an Ammoniumsalzen enthalten. Dies stellt insbesondere bei unkontrollierter Verrottung ein Umweltproblem dar. Die sich aus den bisherigen Ansätzen ergebenen Nachteile sind ein schwieriges Recycling und eine Belastung der Umwelt.

US 2015/0051320 A1 beschreibt eine Platte, die aus Holzfasern und vernetzter Polymilchsäure besteht. Die Platte umfasst ein vernetztes Polymilchsäureharz und Holzfasern, wobei die Holzfasern in einer Menge von 50-150 Gewichtsteilen und 100 Gewichtsteilen von vernetzten Polymilchsäureharz enthalten sind und das vernetzte Polymilchsäureharz durch Wärme initiierte Vernetzung oder Bestrahlung erhalten wird. Die Platte enthält ferner eine laminierte biologisch abbaubare Polymerfolie. Der vorliegenden Erfindung liegt daher die technische Aufgabe zu Grunde ein Materialsystem zu finden, dass ein Recycling erleichtert bzw. eine Materialtrennung nach der Nutzung mit möglichst wenig verbleibendem Abfall ermöglicht. Für dieses Produkt sollen die in der Holzwerkstoff-Industrie üblicherweise verwendeten Maschinen (Conti-Pressen, Kaschierlinien usw.) verwendet werden.

Diese Aufgabe wird erfindungsgemäß durch die Bereitstellung eines Holzwerkstoffproduktes mit den Merkmalen des Anspruchs 1 gelöst.

Demnach wird ein Holzwerkstoff bereitgestellt, der mit einem sowohl hydrolytisch als auch durch Verrottung biologisch abbaubaren Bindemittel hergestellt wird und mit einer Beschichtung, die mit einem biologisch abbaubaren Klebstoff und einer biologisch abbaubaren Folie hergestellt wird. Die Herstellung des Holzwerkstoffes und die Beschichtung erfolgen dabei auf den in der Holzwerkstoffindustrie zur Verfügung stehenden Produktionslinien. Einschränkungen gibt es lediglich bezüglich des Temperaturfensters bei dem die Beschichtung des Holzwerkstoffs erfolgt, da die verwendete biologisch abbaubare Folie oberhalb von 115°C zu schmelzen beginnt. Dies stellt aber keinen großen Unterschied zu anderen thermoplastischen Folien dar, die ebenfalls in einem ähnlichen/vergleichbaren Temperaturfenster verarbeitet werden sollen. Durch die Wahl der Pressparameter ist eine qualitativ einwandfreie Beschichtung möglich. Die eingesetzten Folien können selbstverständlich auch bedruckt sein, wobei die verwendeten Farben und deren Menge auch den Anforderungen für eine Kompostierbarkeit genügen können.

Das vorliegende Holzwerkstoffprodukt ermöglicht eine leichte, ökologische Entsorgung mit einer Recyclingrate von 100% sowie eine Kaskadennutzung der Holzpartikel. Auch wird die Verwendung von für die Verrottung problematischen Inhaltstoffe vermieden.

Biologische Abbaubarkeit im Sinne der vorliegenden Anmeldung ist beispielsweise dann gegeben, wenn nach einer aeroben Kompostierung von höchstens 12 Wochendauer in einer > 2mm Siebfraktion maximal 10 % des ursprünglichen Trockengewichts des Prüfmaterials gefunden werden, gemessen gemäß der Norm EN 13432 (2000).

Biologische Abbaubarkeit führt dazu, dass die (als Bindemittel und in der Folie) verwendeten Polymermischungen in einer angemessenen und nachweisbaren Zeitspanne zerfallen. Der Abbau kann enzymatisch, hydrolytisch, oxidativen und/oder durch Einwirkung von UV-Strahlung erfolgen und wird zum überwiegenden Teil durch die Einwirkung von Mikroorganismen wie Bakterien, Hefen, Pilzen und Algen bewirkt.

Die biologische Abbaubarkeit lässt sich dadurch quantifizieren, dass Polymere mit Kompost gemischt und für eine bestimmte Zeit gelagert werden. Zum Beispiel lässt man gemäß DIN EN 13432 kohlendioxidfreie Luft durch gereiften Kompost während des Kompostierens bei deinem definierten Temperaturprogramm strömen Hierbei wird die biologische Abbaubarkeit über das Verhältnis der netto Kohlendioxidfreisetzung der Probe zur maximalen CO₂-Freisetzung der Probe als prozentualer Grad des biologischen Abbaus definiert. Biologisch abbaubare Polymermischungen zeigen in der Regel schon nach wenigen Tagen der Kompostierung deutliche Abbauerscheinungen wie Pilzbewuchs, Riss- und Lochbildung.

Andere Methoden zur Bestimmung der biologischen Abbaubarkeit werden beispielsweise in ASTM D 5338 und ASTM D 6400-4 beschrieben.

Als Trägermaterial können Holzfaserplatten, insbesondere MDF- oder HDF-Platten, oder Holzspanplatten zum Einsatz kommen. Diese Holzwerkstoffplatten bilden die Basis vieler Gegenstände des täglichen Lebens, beispielsweise von Möbeln oder Belägen für Wand, Boden oder Decke.

Generell ist es auch möglich, Holzfasermatten als Trägermaterial zu verwenden. Holzfasermatten weisen typischerweise eine Rohdichte zwischen 100 und 500 kg/m³, bevorzugt 200 und 400 kg/m³ auf. Derartige Holzfasermatten können sowohl als Dämmstoff und auch als dekorative Oberfläche verwendet werden.

Demnach umfasst das Trägermaterial Holzfasern oder -späne, die durch Zerspanung der Holzhackschnitzel in einem Zerspaner oder ein Zerfaserungsprozess der Holzhackschnitzel in einem Refiner gewonnen werden.

Zur Herstellung der Holzfaserplatten werden bevorzugt Holzfasern, insbesondere trockene Holzfasern, mit einer Länge von 1,5 mm bis 20 mm und einer Dicke von 0,05 mm bis 1 mm verwendet.

Die vorliegend als Trägerplatte verwendete Holzfaserplatte besteht aus einem Fasergemisch umfassend 55 bis 90 Gew%, bevorzugt 70 bis 80 Gew% an Holzfasern und 10 bis 45 Gew%, bevorzugt 20 bis 30 Gew% an biologisch abbaubaren Bindemittel. So können im Falle der Verwendung von Bindefasern als Bindemittel bis zu 45 Gew% Bindefasern im Fasergemisch enthalten sein.

Im Falle einer Spanplatte als Trägerplatte besteht diese aus 60 bis 90 Gew%, bevorzugt 70 bis 80 Gew% an Holzspänen und 5 bis 20 Gew%, bevorzugt 10 bis 15 Gew% an Bindemitteln.

Die Plattendicke der verwendeten Trägerplatten liegt typischerweise zwischen 1,5 mm und 60 mm.

In einer weitergehenden Ausführungsform des vorliegenden Holzwerkstoffproduktes ist das mindestens eine biologisch abbaubare Bindemittel ein natürliches oder ein synthetisches Bindemittel. Das verwendete Bindemittel sollte frei von erdölbasierten Stoffen sein und auch kein Formaldehyd enthalten.

Im Falle der Verwendung eines natürlichen Bindemittels als biologisch abbaubares Bindemittel ist dieses ausgewählt aus einer Gruppe enthaltend Stärke, Zellulosederivate, wie Carboxymethyl-Zellulose, Chitosan, glutenhaltige Bindemittel, wie Hautleim, Knochenleim, Lederleim; milchproteinhaltige Bindemittel, insbesondere aus der Gruppe der Kaseine, und pflanzenproteinhaltige Bindemittel, insbesondere aus der Gruppe der Sojabindemittel, Agar-Agar, Alginat, Gelantine, Guar gum, Gum arabic, Xanthan Gum, Stärke, Pektine, Johannisbrotkernmehl, Polysaccharide, wie Carrageen.

Im Falle der Verwendung eines synthetischen Bindemittels als biologisch abbaubares Bindemittel ist dieses bevorzugt ausgewählt aus der Gruppe enthaltend verseiften Polyvinylalkohol, Polycaprolactam-Polyamid, Polylactat, aliphatische Polyesterharze, insbesondere Polybutylensuccinat, Polybutylensuccinat-Adipat, Polyethylen-Polypropylen-Verbundharz, wobei Polylactate besonders bevorzugt sind. In einer besonders bevorzugten Ausführungsform werden Polymilchsäurefasern mit einer Länge 38 mm +/- 3 mm und einer Feinheit von 1,7 dtex verwendet.

Das biologisch abbaubare Bindemittel kann Zusätze wie pflanzliche Öle, Mittel zur pH-Einstellung, Vernetzer (wie Tannin-haltige Substanzen, Enzyme, insbesondere oxidative und Peroxidasen) oder antimikrobielle Substanzen (wie Benzoesäure, Ascorbinsäure, Chitosan, Lysozym, Nisin u.a) enthalten.

In einer bevorzugten Ausführungsform des vorliegenden Holzwerkstoffproduktes besteht die mindestens eine biologisch abbaubare Polymerfolie aus Lignin, Stärke, Zellulosematerialien, Polymilchsäure, Polyglykolsäure, aliphatischen Polyester, aliphatisch-aromatischen-Copolyester, Polyhydroxyalkanoaten, Polypropylen-Carbonat oder Mischungen davon, wobei Polymerfolien aus Polymilchsäure bevorzugt sind.

Aliphatische Polyester können z.B. Polybutylensuccinat, Polybutylensuccinat-cobutylenadipat, Polybutylensuccinat-co-butylensebacat, Polycaprolacton sein. Aliphatischearomatische Co-Polyester sind Polybutylen-adipat-co-butylenterephtalat, Polybutylensebacatco-butylenterephthalat. Als Polyhydroxyalkanoate können Poly-3-Hydroxybutylat, Poly-3-Hydroxybutylat-co-3-hydroxyvalelat, Poly-3- Hydroxybutylat-co-4-Hydroxybutylat verwendet werden. Geeignete Mischungen sind insbesondere Mischungen von aliphatisch-aromatischen co-Polyestern mit Polymilchsäure oder Mischungen von aliphatischen Polyestern, aliphatische-aromatischen co-Polyestern oder Polyvinylalkohol mit Stärke.

Die Dicke der Folien kann beispielsweise zwischen 10 und 100 µm, bevorzugt zwischen 20 - 80 µm, insbesondere bevorzugt zwischen 40 und 60 µm betragen.

Wie oben angeführt, ist es vorgesehen, zumindest eine biologisch abbaubare Polymerfolie auf dem Trägermaterial anzuordnen.

Es ist aber auch möglich, mehr als eine biologisch abbaubare Polymerfolie auf dem Trägermaterial anzuordnen. Dies kann z.B. in Form einer dublierten Folie erfolgen. Hierbei werden zwei Polymerfolien miteinander vor dem Auflegen auf das Trägermaterial unter Verwendung eines geeigneten Klebstoffes, bevorzugt eines ebenfalls biologisch abbaubaren Klebstoffes (wie z.B. weiter unten aufgelistet) miteinander verklebt und verpresst.

In einer weiteren bevorzugten Ausführungsform ist die mindestens eine biologisch abbaubare Polymerfolie bedruckt. Dabei kann entweder die Oberseite oder die Unterseite der Polymerfolie bedruckt vorliegen.

Wird eine Polymerfolie verwendet, ist die Folie auf der jeweiligen Seite (d.h. Unterseite), welche dem Trägermaterial, insbesondere der Trägerplatte, zugewandt ist, bedruckt. Bei Verwendung von zwei Folien (dublierter Folie) kann die Oberseite der ersten oder die Unterseite der zweiten Folie bedruckt sein.

Dabei sollte Zusammensetzung und Menge der verwendeten Druckfarben den Anforderungen an die Verwertung von Verpackungen durch Kompostierung und biologischen Abbau (DIN EN 13432:2000-12) entsprechen und die Anforderungen bezüglich Schwermetallen und die Höchstmengen eingehalten werden (d.h. < 1% pro Zusatzstoff und < 5 % für Summe aller Zusatzstoffe). So sind bei einer Folie mit einem Flächengewicht 100g/m³ als Summe 4,99g Farbe/m² zulässig. Es ist jedoch wünschenswert, wenn die Summe der auf der Polymerfolie vorgesehenen Druckfarben nicht mehr als 3 g/m² beträgt.

Es ist auch vorgesehen, die mindestens eine biologisch abbaubare Polymerfolie unter Verwendung von mindestens einem biologisch abbaubaren Klebstoff mit dem mindestens einen Trägermaterial zu verbinden und zu verpressen oder zu kaschieren.

Als biologisch abbaubarer Klebstoff kann mindestens ein Klebstoff basierend auf einem Polyurethanharz, Acrylharz, Polyvinylalkohol, Polycaprolactam-Polyamid, Polylactat, Polyacetat, aliphatische Polyesterharze, insbesondere Polybutylensuccinat, Polybutylensuccinat-Adipat, Polyethylen-Polypropylen-Verbundharz verwendet werden.

Geeignete biologisch abbaubare Leime zum Verkleben von Polymerfolien sind z.B. in der WO 2012/013506 A1 beschrieben. Hier wird ein Polyurethan-Dispersionsklebstoff bestehend aus 60 Gew% Diisocyanaten, Polyesterdiolen und einer bifunktionellen Carbonsäure (z.B. Dihydroxycarbonsäure und Diaminocarbonsäure) zum Verkleben von Polymerfolien angewendet. Aber auch Emulsionen basierend auf Acrylharzen, wie z.B. ein Styren-Acryl-Harz (zugelassen für den Kontakt mit Lebensmitteln), Styren-Butadien-Emulsion oder Mischungen davon sind geeignet (WO 2011/028499 A2). Geeignete Leime sind u.a. von der BASF unter dem Handelsnamen EPOTAL ECO erhältlich.

Die wässrigen Klebstoffzubereitungen können zudem mit üblichen Hilfsstoffen (Netzmittel, fettiger, Sichtschutzstabilisatoren, Entschäumer und andere) versetzt sein.

Wie oben bereits angedeutet, können die vorliegenden Holzwerkstoffprodukte als Wand-, Decken- oder Bodenpaneel und Möbelelement verwendet werden.

Die Aufgabe der vorliegenden Erfindung wird auch mit einem Verfahren gemäß Anspruch 11 zur Herstellung des oben beschriebenen Holzwerkstoffproduktes gelöst.

Wie oben bereits angedeutet, werden Holzfasern und Holzspäne durch Zerspanung von Holzhackschnitzeln in einem Refiner gewonnen. Die Beleimung der Holzfasern kann unmittelbar nach dem Faseraufschluss vor dem Trocknen erfolgen. Die Beleimung der Holzfasen kann aber auch nach dem Trocknen erfolgen. Im Falle der Verwendung von Holzspänen erfolgt die Beleimung jedoch nach der Sichtung, wobei das Beleimen durch Vermischen von Spänen und Leim erfolgt.

Im Falle der Herstellung von Holzfaserplatten oder Holzspanplatten werden nach dem Sichten die beleimten Holzspäne oder Holzfasern auf ein Transportband unter Ausbildung eines Span- oder Faserkuchens aufgestreut. Die im Falle der Holzfasern typischerweise verwendete Streustation besteht aus einem Dosierbunker, einer Mattenstreuung und einer Mattenglättung. Im Falle der Holzspäne wird üblicherweise mit einer Windstreuung gearbeitet, wobei zunächst eine erste Deckschicht, gefolgt von der Mittelschicht und abschließend eine zweite Deckschicht gestreut wird.

Der Spankuchen bzw. der Faserkuchen wird anschließend zunächst vorgepresst und anschließend bei Temperaturen zwischen 100°C und 250°C, bevorzugt 130°C und 220°C, insbesondere bei 200°C heiß verpresst.

Hierbei wird der Span- oder Faserkuchen nach dem Streuen zunächst gewogen und die Feuchte gemessen. Der Span- bzw. Faserkuchen gelangt anschließend in die Vorpresse. Hier wird der Kuchen bei der kalten Vorverdichtung in der Dicke reduziert, damit die anschließenden Heißpressen effizienter beschickt werden können und die Gefahr der Beschädigung des Kuchens reduziert wird. Bei der Vorverdichtung im Durchlauf wird zumeist mit Bandvorpressen, nach dem Prinzip des Förderbandes (seltener mit Plattenbandvorpressen, nach dem Prinzip der Panzerkette, oder mit Walzenbandvorpressen, nach dem Prinzip des Pyramidensteintransportes mit Rundhölzern) gearbeitet.

Nach der Vorpressung folgt die Besäumung des verdichteten Kuchens bzw. der Matte. Hier werden Seitenstreifen von der Matte abgetrennt, so dass die entsprechend gewünschte Plattenbreite produziert werden kann. Die Seitenstreifen werden vor der Streumaschine in den Prozess zurückgeführt. Weitere Messgeräte zur Dichtekontrolle oder Metallerkennung können folgen. Auch eine Mattenbesprühung mit Hilfsstoffen zur Verbesserung der Oberflächenqualitäten oder Beschleunigung der Mattendurchwärmung kann folgen.

Es schließt sich die Heißpressung an, die getaktet oder kontinuierlich durchgeführt werden kann. Vorliegend ist ein kontinuierlich durchgeführtes Heißpressen bevorzugt. Hierzu werden kontinuierlich arbeitende Pressen verwendet, die mit einem Pressband oder mit Pressplatten arbeiten, über die der Druck und die Temperatur übertragen werden. Das Band wird dabei entweder von einem Rollenteppich, einem Stabteppich oder einem Ölpolster gegenüber den zumeist mit Thermalöl (seltener mit Dampf) beheizten Heizplatten abgestützt. Dieses Pressensystem ermöglicht die Produktion von Plattendicken zwischen 1,5 mm und 60 mm. Auf Kalanderpressen können ausschließlich dünne Span- oder Faserplatten hergestellt werden. Die Pressung erfolgt hier mit Presswalzen und einem Außenband auf einer beheizten Kalanderwalze.

Im weiteren Verlauf des Verfahrens kann die Oberfläche des hergestellten Trägermaterials, insbesondere in Form einer Holzfaserplatte oder Holzspanplatte, nach dem Abkühlen geschliffen werden. Auf diese Weise wird eine gute Haftung der Polymerfolie auf der Trägeroberfläche gewährleistet.

Auf die Oberfläche des Trägermaterials und / oder auf die biologisch abbaubare Polymerfolie wird anschließend der biologisch abbaubare Klebstoff aufgetragen. Dies erfolgt mittels üblicher Beschichtungsverfahren, wie Walzenstreichen, Bürstenstreichen, Sprühbeschichten, Rakeln u.a.

Die aufzutragende Klebstoffmenge kann zwischen 50 - 150 g/m² (flüssig), bevorzugt 80 - 130 g/m² (flüssig), insbesondere bevorzugt 100 - 120 g/m² (flüssig). betragen.

Zum Verbinden mit dem Trägermaterial kann die mit dem Klebstoff versehene Polymerfolie mit dem Trägermaterial verpresst werden oder auf das Trägermaterial aufkaschiert werden.

Im Falle des Verpressens ist es vorgesehen, dass die Presstemperatur beim Verpressen der mindestens einen biologisch abbaubaren Polymerfolie mit dem Trägermaterial zwischen 50°C und 100°C, bevorzugt zwischen 60°C und 90°C, insbesondere bevorzugt zwischen 70°C und 80°C beträgt.

Der Pressdruck kann dabei zwischen 15 und 25 kg/cm³, bevorzugt bei 20 kg/cm³ und die Presszeit zwischen 30 und 90 sec, bevorzugt bei 60 sec liegen.

Wie oben erläutert, besteht der wesentliche Vorteil des vorliegenden Holzwerkstoffproduktes darin, dass diese in ökologischer Weise zu 100% recycelt werden kann.

Ein erfindungsgemäßes Verfahren zum Recyceln des oben beschriebenen Holzwerkstoffproduktes ist im Anspruch 13 definiert.

Während der Wasserdampfbehandlung der Zerkleinerungsprodukte des Holzwerkstoffproduktes in einer geeigneten Dampfkammer erfolgt bereits eine zumindest teilweise Hydrolyse des im Trägermaterial verwendeten Bindemittels und des zum Verkleben der Polymerfolie verwendeten Klebstoffes.

Die vom Bindemittel und voneinander getrennten Holzpartikel (Holzfasern, Späne) werden mach der Wasserdampfbehandlung abgesiebt und getrocknet und bevorzugt in den Kreislauf als Recyclat zur Herstellung von neuen Holzwerkstoffprodukten eingeschleust.

Die (bereits zerkleinerten) Polymerfolien werden während der Wasserdampfbehandlung ebenfalls zumindest teilweise anhydrolysiert und nach Abtrennen von den Holzpartikeln einer Kompostieranlage zugeführt.

Die vorliegende Erfindung wird im Folgenden im Detail anhand von mehreren Ausführungsbeispielen erläutert.

### Ausführungsbeispiel 1:

Holzspäne, die mit einem Leim auf Stärkebasis beleimt waren, wurden auf einer Conti-Presse zu einer Dreischichtspanplatte verpresst. Dabei wurde mit den gleichen Produktionsparametern gearbeitet, lediglich der Pressfaktor wurde um ca. 30% erhöht.

Die Platten wurden nach dem Abkühlen geschliffen und anschließend beschichtet. Dabei wurde eine Polymilchsäure-Folie (Stärke 60 µm) mit Hilfe eines biologisch abbaubaren Leim (EPOTAL ECO 3710) auf die Spanplatte aufgepresst. Die verwendete Leimmenge betrug 120 g/m² (flüssig). Der Pressdruck betrug 20 kg/cm², die Presstemperatur betrug 70°C und die Presszeit betrug 60 Sekunden.

Die Folie zeigte eine gute Haftung auf der Spanplatte. Beim Abziehen der Folie war Kohäsionsbruch in der Platte zu beobachten.

### Ausführungsbeispiel 2:

Holzfasern wurden auf einer Conti-Presse mit Hilfe von Polymilchsäurefasern als Bindemittel zu einer Faserplatte verpresst. Der Bindemittelanteil lag bei ca. 40 Gew% Dabei wurde die Platte nach dem Durchlaufen der Heißpresse einer Kühlpresse zugeführt.

Die Platten wurden nach dem Abkühlen geschliffen und anschließend beschichtet. Dabei wurde eine dublierte Polymilchsäure-Folie (Stärke: 2 x 60 µm) mit Hilfe eines biologisch abbaubaren Leim (EPOTAL ECO 3710) auf die Faserplatte aufgepresst.

Die Oberseite der Folie, die der Faserplatte zugewandt war, war mit einem Holzdekor bedruckt. Die Summe der Druckfarben betrug weniger als 3 g/m². Die verwendete Leimmenge betrug 120 g/m² (flüssig). Der Pressdruck betrug 20 kg/cm², die Presstemperatur betrug 70°C und die Presszeit betrug 60 Sekunden.

Die Folie zeigte eine gute Haftung auf der Faserplatte. Beim Abziehen der Folie war Kohäsionsbruch in der Platte zu beobachten. Die Großformate wurden anschließend zu Fußbodenelementen mit einem leimlosen Verbindungssystem verarbeitet.

### Ausführungsbeispiel 3:

Holzfasern, die mit einem Leim auf Kaseinbasis beleimt waren, wurden auf einer Conti-Presse zu einer Holzfaserplatte verpresst. Dabei wurde mit den gleichen Produktionsparametern gearbeitet, lediglich der Pressfaktor wurde um ca. 30% erhöht.

Die Platten wurden nach dem Abkühlen geschliffen und anschließend beschichtet. Dabei wurde eine Polymilchsäure-Folie (Stärke 60 µm) mit Hilfe eines biologisch abbaubaren Leim (EPOTAL ECO 3710) auf die Faserplatte aufgepresst. Die verwendete Leimmenge betrug 120 g/m² (flüssig). Der Pressdruck betrug 20 kg/cm², die Presstemperatur betrug 70°C und die Presszeit betrug 60 Sekunden.

Die Folie zeigte eine gute Haftung auf der Spanplatte. Beim Abziehen der Folie war Kohäsionsbruch in der Platte zu beobachten.

### Ausführungsbeispiel 4:

Holzspäne, die mit einem Sojabindemittel beleimt waren, wurden auf einer Conti-Presse zu einer Dreischichtspanplatte verpresst. Dabei wurde mit den gleichen Produktionsparametern gearbeitet, lediglich der Pressfaktor wurde um ca. 30% erhöht.

Die Platten wurden nach dem Abkühlen geschliffen und anschließend beschichtet. Dabei wurde eine Polymilchsäure-Folie (Stärke 60 µm) mit Hilfe eines biologisch abbaubaren Leim (EPOTAL ECO 3710) auf die Spanplatte aufgepresst. Die verwendete Leimmenge betrug 120 g/m² (flüssig). Der Pressdruck betrug 20 kg/cm², die Presstemperatur betrug 70°C und die Presszeit betrug 60 Sekunden.

Die Folie zeigte eine gute Haftung auf der Spanplatte. Beim Abziehen der Folie war Kohäsionsbruch in der Platte zu beobachten.

## Patentansprüche

1. Recycelbare Holzwerkstoffplatte, umfassend
- mindestens eine Holzfaserplatte als Trägermaterial bestehend aus einem Fasergemisch umfassend 55 bis 90 Gew% an Holzfasern und 10 bis 45 Gew% an Bindefasern als biologisch abbaubares Bindemittel, und
- mindestens eine auf dem Trägermaterial angeordnete biologisch abbaubare Polymerfolie, wobei die mindestens eine biologisch abbaubare Polymerfolie mittels mindestens einem biologisch abbaubaren Klebstoff mit dem mindestens einen Trägermaterial verbunden ist.

2. Holzwerkstoffplatte nach Anspruch 1, **dadurch gekennzeichnet, dass** die mindestens eine Holzfaserplatte eine Holzfaserdämmstoffplatte, eine MDF- oder HDF-Platte ist.

3. Holzwerkstoffplatte nach Anspruch 1 oder 2, **dadurch gekennzeichnet, dass** die Holzfaserplatte aus einem Fasergemisch umfassend 70 bis 80 Gew% an Holzfasern und 20 bis 30 Gew% an Bindefasern als biologisch abbaubaren Bindemittel besteht.

4. Holzwerkstoffplatte nach einem der vorhergehenden Ansprüche, **dadurch gekennzeichnet, dass** als Bindefasern Polymilchsäurefasern mit einer Länge 38 mm +/- 3 mm und einer Feinheit von 1,7 dtex verwendet werden.

5. Holzwerkstoffplatte nach einem der vorhergehenden Ansprüche, **dadurch gekennzeichnet, dass** die mindestens eine biologisch abbaubare Polymerfolie aus Lignin, Stärke, Zellulosematerialien, Polymilchsäure, Polyglykolsäure, aliphatischen Polyester, aliphatisch-aromatischen-Copolyester, Polyhydroxyalkanoaten, Polypropylen Carbonat oder Mischungen davon besteht.

6. Holzwerkstoffplatte nach einem der vorhergehenden Ansprüche, **dadurch gekennzeichnet, dass** die mindestens eine biologisch abbaubare Polymerfolie bedruckt ist.

7. Holzwerkstoffplatte nach Anspruch 6, **dadurch gekennzeichnet, dass** die Unterseite oder die Oberseite der Polymerfolie bedruckt ist.

8. Holzwerkstoffplatte nach einem der vorhergehenden Ansprüche, **dadurch gekennzeichnet, dass** die Polymerfolie in Form einer dublierten Folie vorliegt.

9. Holzwerkstoffplatte nach einem der vorhergehenden Ansprüche, **dadurch gekennzeichnet, dass** der mindestens eine biologisch abbaubare Klebstoff auf einem Polyurethanharz, Acrylharz, Polyvinylalkohol, Polycaprolactam-Polyamid, Polylactat, aliphatische Polyesterharze, insbesondere Polybutylensuccinat, Polybutylensuccinat-Adipat, Polyethylen-Polypropylen-Verbundharz basiert.

10. Verwendung einer Holzwerkstoffplatte nach einem der vorhergehenden Ansprüche als Wandpaneel, Deckenpaneel, Bodenpaneel oder Möbelelement.

11. Verfahren zur Herstellung eines Holzwerrstoffplatte nach einem der Ansprüche 1-9 umfassend die Schritte:
- Bereitstellen eines Gemisches aus 55-90 Gew% Holzfasern und 10-45 Gew% Bindefasern als mindestens einem biologisch abbaubaren Bindemittel;
- Verpressen des Gemisches zu einem Trägermaterial;
- optional Schleifen des Trägermaterials nach Abkühlen;
- Auftragen von mindestens einem biologisch abbaubaren Klebstoff auf mindestens eine biologisch abbaubare Polymerfolie;
- Auflegen der mit dem Klebstoff versehenen biologisch abbaubaren Polymerfolie auf mindestens eine Seite der Trägermaterials; und
- Verbinden der mindestens einen biologisch abbaubaren Polymerfolie mit dem Trägermaterial.

12. Verfahren nach Anspruch 11, **dadurch gekennzeichnet, dass** die Presstemperatur beim Verpressen der mindestens einen biologisch abbaubaren Polymerfolie mit dem Trägermaterial zwischen 50°C und 100°C, bevorzugt zwischen 60°C und 90°C, insbesondere bevorzugt zwischen 70°C und 80°C beträgt.

13. Ökologisches Verfahren zum Recyceln einer Holzwerkstoffplatte nach einem der Ansprüche 1 bis 9, umfassend die folgenden Schritte:
- Zerkleinern der Holzwerkstoffplatte;
- Beaufschlagen der Zerkleinerungsprodukte mit Wasserdampf unter einem Druck von 0,4 bis 0,6 MPa, bevorzugt 0,4 bis 0,5 MPa für einen Zeitraum von 0,5 bis 4 Stunden, bevorzugt von 1 bis 3 Stunden;
- Trennen der sich bildenden Hauptfraktionen aus Holzpartikel und Polymerfolie;
- Rückführen der abgetrennten Holzpartikel in einen Holzkreislauf, und
- Ausschleusen und Kompostieren der abgetrennten Polymerfolie.

## Claims

1. Recyclable wood-based panel comprising
- at least one wood fiber board as support material consisting of a fiber mixture comprising 55 to 90% by weight of wood fibers and 10 to 45% by weight of binder fibers as biodegradable binder, and
- at least one biodegradable polymeric film disposed on the support material, wherein the at least one biodegradable polymeric film is bonded to the at least one support material by means of at least one biodegradable adhesive.

2. Wood-based panel according to claim 1, **characterized in that** the at least one wood fiber board is a wood fiber insulation board, an MDF board or an HDF board.

3. Wood-based panel according to claim 1 or 2, **characterized in that** the wood fiber board consists of a fiber mixture comprising 70 to 80% by weight of wood fibers and 20 to 30% by weight of binder fibers as biodegradable binder.

4. Wood-based panel according to one of the preceding claims, **characterized in that** polylactic acid fibers having a length of 38 mm +/- 3 mm and a fineness of 1.7 dtex are used as binder fibers.

5. Wood-based panel according to any one of the preceding claims, **characterized in that** the at least one biodegradable polymer film consists of lignin, starch, cellulose materials, polylactic acid, polyglycolic acid, aliphatic polyesters, aliphatic-aromatic copolyesters, polyhydroxyalkanoates, polypropylene carbonate or mixtures thereof.

6. Wood-based panel according to any one of the preceding claims, **characterized in that** the at least one biodegradable polymer film is printed.

7. Wood-based panel according to claim 6, **characterized in that** the lower side or the upper side of the polymer film is printed.

8. Wood-based panel according to any one of the preceding claims, **characterized in that** the polymer film is in the form of a doubled film.

9. Wood-based panel according to one of the preceding claims, **characterized in that** the at least one biodegradable adhesive is based on a polyurethane resin, acrylic resin, polyvinyl alcohol, polycaprolactam polyamide, polylactate, aliphatic polyester resins, in particular polybutylene succinate, polybutylene succinate adipate, polyethylene-polypropylene composite resin.

10. Use of a wood-based panel according to any one of the preceding claims as a wall panel, ceiling panel, floor panel or furniture element.

11. A method of manufacturing a wood-based panel according to any one of claims 1-9 comprising the steps of:
- providing a mixture of 55-90 wt% wood fibers and 10-45 wt% binder fibers as at least one biodegradable binder;
- compressing the mixture into a support material;
- optional grinding of the support material after cooling;
- applying at least one biodegradable adhesive to at least one biodegradable polymeric film;
- placing the adhesive-coated biodegradable polymer film on at least one side of the support material; and
- bonding the at least one biodegradable polymer film to the support material.

12. Method according to claim 11, **characterized in that** the pressing temperature during pressing of the at least one biodegradable polymer film with the support material is between 50°C and 100°C, preferably between 60°C and 90°C, more preferably between 70°C and 80°C.

13. An ecological method for recycling a wood-based panel according to any one of claims 1 to 9, comprising the following steps:
- shredding of the wood-based panel;
- pressurizing the comminution products with steam under a pressure of 0.4 to 0.6 MPa, preferably 0.4 to 0.5 MPa for a period of 0.5 to 4 hours, preferably 1 to 3 hours;
- separating the main fractions formed from wood particles and polymer film;
- returning the separated wood particles to a wood cycle, and
- discharge and composting of the separated polymer film.

## Revendications

1. Plaque en matériau dérivé du bois recyclable comprenant
- au moins une plaque de fibre de bois en tant que matériau porteur se composant d'un mélange de fibre comprenant 55 à 90 % en poids de fibres de bois et 10 à 45 % en poids de fibres de liant en tant que liant biodégradable, et
- au moins un film de polymère biodégradable agencé sur le matériau porteur, dans laquelle l'au moins un film de polymère biodégradable est relié au moyen d'au moins une colle biodégradable à l'au moins un matériau porteur.

2. Plaque en matériau dérivé du bois selon la revendication 1, **caractérisée en ce que** l'au moins une plaque de fibre de bois est une plaque isolante de fibre de bois, une plaque MDF ou HDF.

3. Plaque en matériau dérivé du bois selon la revendication 1 ou 2, **caractérisée en ce que** la plaque de fibre de bois se compose d'un mélange de fibre comprenant 70 à 80 % en poids de fibres de bois et 20 à 30 % en poids de fibres de liant en tant que liant biodégradable.

4. Plaque en matériau dérivé du bois selon l'une des revendications précédentes, **caractérisée en ce que** des fibres d'acide polylactique avec une longueur de 38 mm +/- 3 mm et une finesse de 1,7 dtex sont utilisées en tant que fibres de liant.

5. Plaque en matériau dérivé du bois selon l'une des revendications précédentes, **caractérisée en ce que** l'au moins un film de polymère biodégradable se compose de lignine, d'amidon, de matériaux de cellulose, d'acide polylactique, d'acide polyglycolique, de polyester aliphatique, de copolyester aliphatique-aromatique, de polyhydroxyalkanoates, de carbonate de polypropylène ou de mélanges de ceux-ci.

6. Plaque en matériau dérivé du bois selon l'une des revendications précédentes, **caractérisée en ce que** l'au moins un film de polymère biodégradable est imprimé.

7. Plaque en matériau dérivé du bois selon la revendication 6, **caractérisée en ce que** le côté inférieur ou le côté supérieur du film de polymère est imprimé.

8. Plaque en matériau dérivé du bois selon l'une des revendications précédentes, **caractérisée en ce que** le film de polymère se présente sous la forme d'un film doublé.

9. Plaque en matériau dérivé du bois selon l'une des revendications précédentes, **caractérisée en ce que** l'au moins une colle biodégradable se base sur une résine de polyuréthane, une résine acrylique, un alcool polyvinylique, un polyamide de polycaprolactame, un polylactate, des résines de polyester aliphatiques, en particulier un succinate de polybutylène, un adipate de succinate de polybutylène, une résine composite de polypropylène et de polyéthylène.

10. Utilisation d'une plaque de matériau dérivé du bois selon l'une des revendications précédentes en tant que panneau de paroi, panneau de plafond, panneau de sol ou élément de meuble.

11. Procédé de fabrication d'une plaque en matériau dérivé du bois selon l'une des revendications 1 à 9, comprenant les étapes :
- de fourniture d'un mélange de 55 à 90 % en poids de fibres de bois et 10 à 45 % en poids de fibres de liant en tant qu'au moins un liant biodégradable ;
- de compression du mélange en un matériau porteur ;
- de ponçage en option du matériau porteur après refroidissement ;
- d'application d'au moins une colle biodégradable sur au moins un film de polymère biodégradable ;
- de placement du film de polymère biodégradable pourvu de la colle sur au moins un côté du matériau porteur ; et
- de liaison d'au moins un film de polymère biodégradable avec le matériau porteur.

12. Procédé selon la revendication 11, **caractérisé en ce que** la température de compression lors de la compression de l'au moins un film de polymère biodégradable avec le matériau porteur est comprise entre 50 °C et 100 °C, de préférence entre 60 °C et 90 °C, en particulier de préférence entre 70 °C et 80 °C.

13. Procédé écologique pour le recyclage d'une plaque en matériau dérivé du bois selon l'une des revendications 1 à 9, comprenant les étapes suivantes :
- le broyage de la plaque de matériau dérivé du bois ;
- l'alimentation des produits de broyage en vapeur d'eau sous une pression de 0,4 à 0,6 MPa, de préférence 0,4 à 0,5 MPa pendant une période de 0,5 à 4 heures, de préférence de 1 à 3 heures ;
- la séparation des fractions principales se formant de particules de bois et de film de polymère ;
- le retour des particules de bois séparées dans un circuit de bois, et
- l'évacuation et le compostage du film de polymère séparé.
